# EUROPÄISCHE PATENTSCHRIFT

(11) **EP 1 872 462 B1**
(45) Veröffentlichungstag und Bekanntmachung des Hinweises auf die Patenterteilung: **21.09.2011**
(21) Anmeldenummer: 06723769.3
(22) Anmeldetag: 28.03.2006
(51) Int. Cl.: H02K 9/14, H02K 5/18

(54) **ELEKTROMOTOR**
ELECTRIC MOTOR
MOTEUR ELECTRIQUE

(30) Priorität: 12.04.2005 DE 102005016905
(43) Veröffentlichungstag der Anmeldung: 02.01.2008
(73) Patentinhaber: SEW-EURODRIVE GmbH & Co. KG, 76646 Bruchsal (DE)
(72) Erfinder: DREXLER, Mario, 74889 Sinsheim (DE)
(74) Vertreter: Tüngler, Eberhard
(86) Internationale Anmeldenummer: PCT/EP2006/002793
(87) Internationale Veröffentlichungsnummer: WO 2006/108507

(56) Entgegenhaltungen:
- EP-A- 1 065 028
- DE-A1- 1 935 246
- DE-A1- 10 203 406
- US-A- 2 016 917
- US-B1- 6 762 527
- PATENT ABSTRACTS OF JAPAN Bd. 002, Nr. 020 (E-012), 9. Februar 1978 (1978-02-09) -& JP 52 140809 A (HITACHI LTD), 24. November 1977 (1977-11-24)
- PATENT ABSTRACTS OF JAPAN Bd. 016, Nr. 352 (E-1241), 29. Juli 1992 (1992-07-29) -& JP 04 109845 A (MITSUBISHI ELECTRIC CORP), 10. April 1992 (1992-04-10)
- PATENT ABSTRACTS OF JAPAN Bd. 2002, Nr. 12, 12. Dezember 2002 (2002-12-12) -& JP 2002 221197 A (HITACHI LTD), 9. August 2002 (2002-08-09)

## Beschreibung

Die Erfindung betrifft einen Elektromotor.

Motoren mit Lüftern zur Eigenbelüftung und zugehörigen Lüfterhauben sind bekannt. Die Lüfterhauben sind nicht stapelbar und benötigen im Lager viel Platz. Die Lüfterhauben des Standes der Technik sind als runde Hauben ausgeführt. In axialer Richtung sind die also als Rotationskörper ausgeführt.

Es sind Anschlusskästen von Motoren bekannt, in welche Bohrlöcher von der Innenseite aus eingebracht sind. Die Wandstärke ist entsprechend dick gewählt und daher ist viel Material für das Gehäuse des Motors notwendig. Der Motor ist somit schwer und kostspielig.

Auch im Bereich der Kühlrippen sind Bohrlöcher bekannt für das Einbringen von Schrauben, beispielsweise zum Anschrauben eines Typenschildes. Diese Bohrlöcher sind in massive Materialanhäufungen eingebracht, die derart groß oder geometrisch ungünstig sind, dass sie den Kühlluftstrom entlang der Rippen in seiner Wirkungsweise verschlechtern.

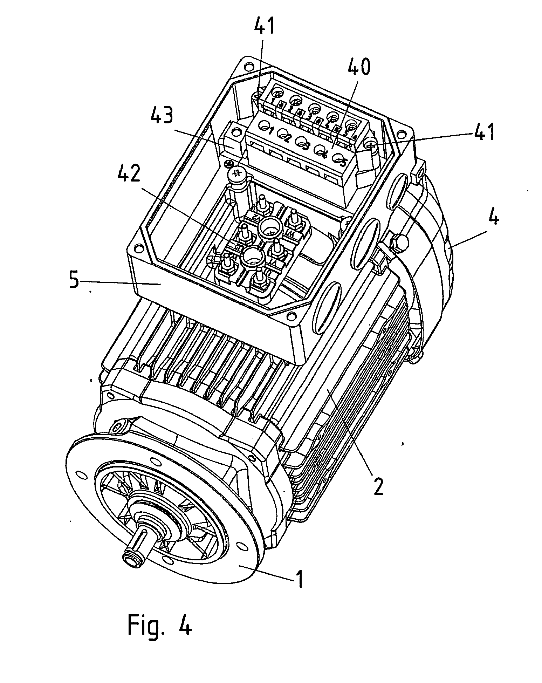

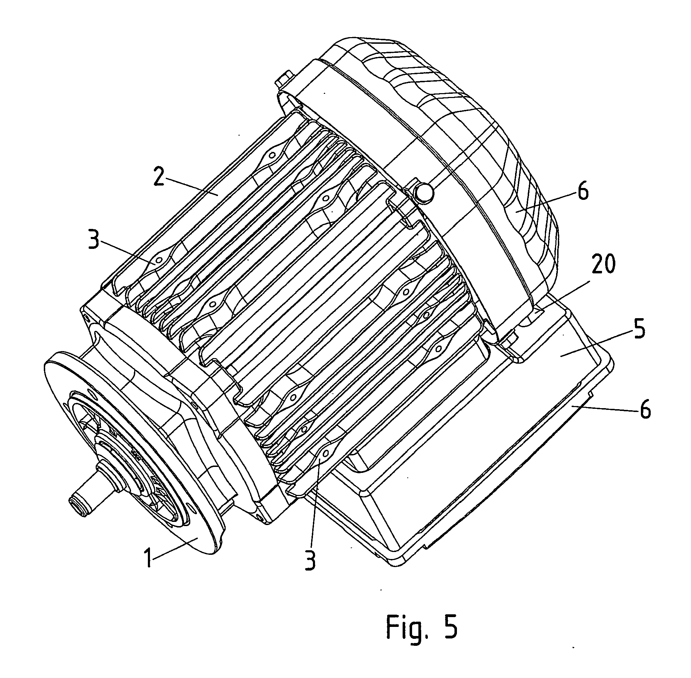

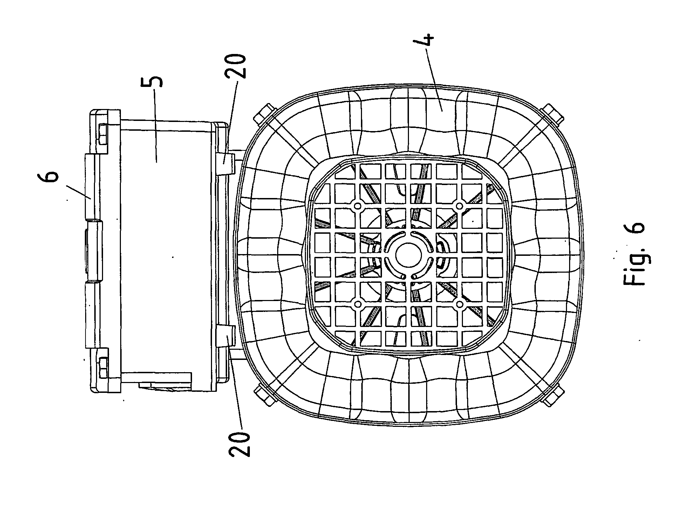

Insbesondere aus den Figuren 4, 5, und 6 Aus der JP 52 140 809 A und dem zugehörigen Abstract ist ein Elektromotor bekannt, dessen Lüfterhaube nach außen zylindrisch erschelnt, also eine zylindrische glatte Oberfläche aufweist und nach Innen eine unregelmäßige Anordnung von sich nach radial innen gerichtet erstreckenden Erhebungen. Somit ist die Gesamt-Wandstärke der Lüfterhaube nicht konstant sondern variiert. Dabei ist die Lüfterhaube auch nicht einstückig gefertigt sondern aus einem zylindrischen rohrförmigen Tell gefertigt, In das ein die Erhebungen erzeugendes Teil eingeschoben ist.

Der Erfindung liegt daher die Aufgabe zugrunde, einen Elektromotor stabiler und umweltschonender weiterzubilden.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass der Elektromotor mit Lüfter und zugehöriger Lüfterhaube ausgeführt ist, wobei die Lüfterhaube wellenförmige Einprägungen aufweist. Von Vorteil ist dabei, dass die wellenförmigen Einprägungen die Steifheit der Haube erhöhen und somit der Motor stabiler wird. Außerdem ist die Geräuschentwicklung kleiner und daher die Umwelt-Emission, insbesondere bezüglich Schall, verringert.

Die wellenförmigen Einprägungen stellen Abweichungen von der runden, im Stand der Technik bekannten Form dar. Somit verschiebt sich die wirksamste Eigenschwingung in einen höheren Frequenzbereich. Bei vorteilhaften beispielhaften acht Wellen, also Erhöhungen und Erniedrigungen am Umfang, verachtfacht sich die stark vertretene Haupteigenschwingungsfrequenz, also Grundschwingung. Der Motor generiert jedoch mit seinem Blechpaket und seiner Wicklung immer noch Schwingungen im Bereich von 0 bis 50Hz oder auch 300Hz. Der Energieanteil, den die Lüfterhaube mit ihrer verschobenen Grundfrequenz in diesem Bereich abstrahlt, verringert sich erheblich.

Bei einer vorteilhaften Ausgestaltung weist die Lüfterhaube an ihrem Umfang in Umfangsrichtung einander abwechselnde Erhöhungen und Vertiefungen auf als wellenförmige Einprägungen. Von Vorteil ist dabei, dass die Fertigung durch Tiefziehen oder auch Spritzgusstechnik kostengünstig ausführbar ist und die Ausführung formschön ist mit gleichzeitiger steifigkeitserhöhender und geräuschmindernder Wirkung. Bei unregelmäßiger Beabstandung der Erhöhungen und Vertiefungen wird die Geräuschentwicklung noch weiter verringerbar. Bei der vorliegenden Erfindung ist der Abstand der Wellen, also Vertiefungen und Erhöhungen, regelmäßig in Umfangsrichtung ausgeführt. Jedoch nimmt dieser Abstand, der auch als Periodenlänge bezeichenbar ist, in axialer Richtung vom Motor weg gerichtet ab. Die gesamte Mimik oder Kontur verjüngt sich also zum Lüftergitter hin, das an der Frontendseite der Haube angeordnet ist zum Ansaugen der Luft. Durch diese Verjüngung wird das Schwingverhalten weiter unterdrückbar und die Festigkeit der Haube weiter erhöht. Zusätzlich ist die Haube formschön und macht einen gefälligen Eindruck.

Bei einer vorteilhaften Ausgestaltung ist an der Lüfterhaube ein Stapelrand vorgesehen. Von Vorteil ist dabei, dass die Lüfterhaube im Lager platzsparend lagerbar sind. Außerdem wirkt der Stapelrand steifigkeitserhöhend. Außerdem begrenzt der Stapelrand die wellenförmigen Einprägungen. Von Vorteil ist dabei, dass auch die Schwingfähigkeit reduziert wird, da der Stapelrand den Verlauf der Lüfterhaube in axialer Richtung fast unstetig unterbricht, weil er die Einprägungen begrenzt. Auch dadurch erhöhen sich die hauptsächlich vertretenen Eigenschwingungsfrequenzen.

Insbesondere hat sich herausgestellt, dass durch die enge räumliche Nähe des Stapelrandes und der Einprägungen der Stapelrand und die wellenförmigen Einprägungen derart zusammenwirken, dass die Festigkeit der Lüfterhaube insgesamt vorteiligerweise verbessert ist.

Weitere Vorteile ergeben sich aus den Unteransprüchen.

### Bezugszeichenliste

1 Flansch
2 Kühlrippe
3 mandelförmige Verdickung
4 Lüfterhaube
5 Anschlusskastenunterteil
6 Anschlusskastenoberteil
20 Nocken
30 Kabel-Verschraubung
31 Stapelrand
40 Gleichrichterbaustein als Option
41 Befestigungsschrauben für Option
42 Klemmbrett
43 Schutzleiteranschlussvorrichtung
80 Bohrloch in Nocke
100 Erhöhung
101 Vertiefung

Die Erfindung wird nun anhand von Abbildungen näher erläutert:

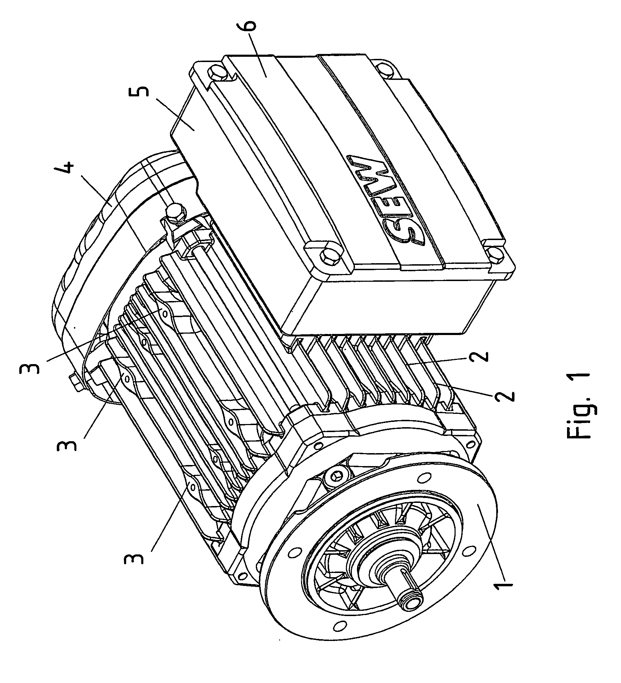

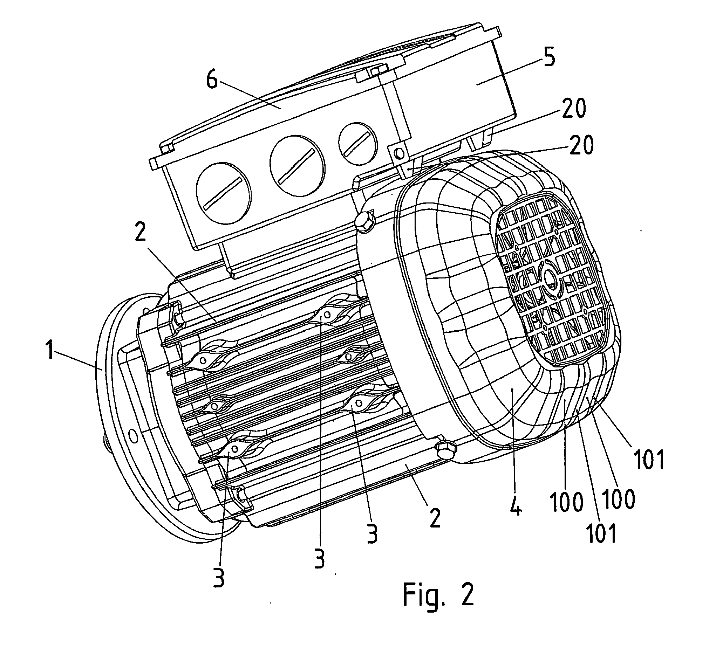

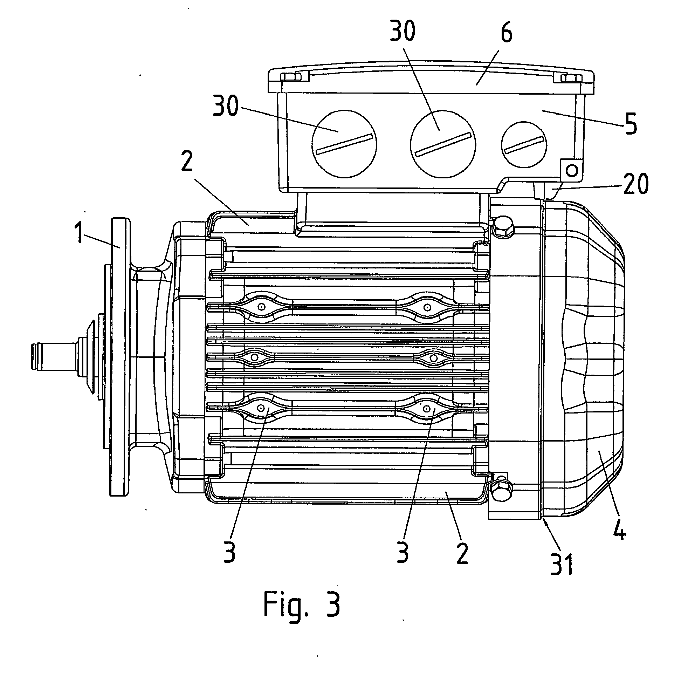

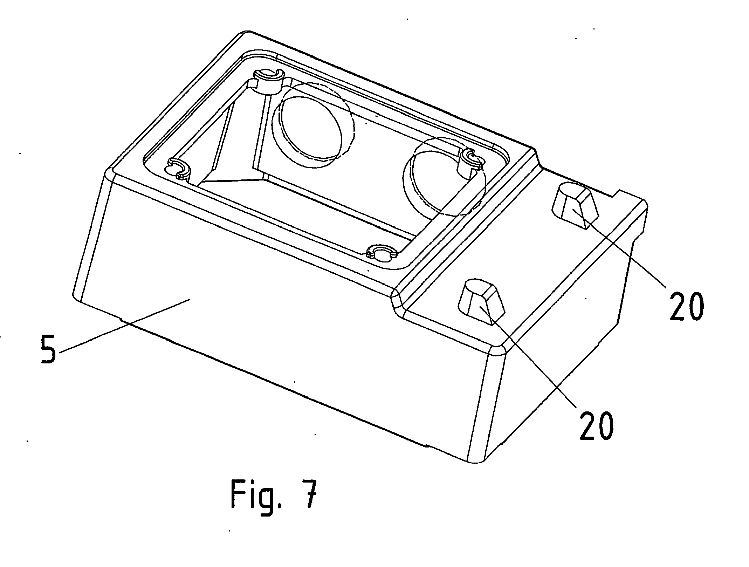

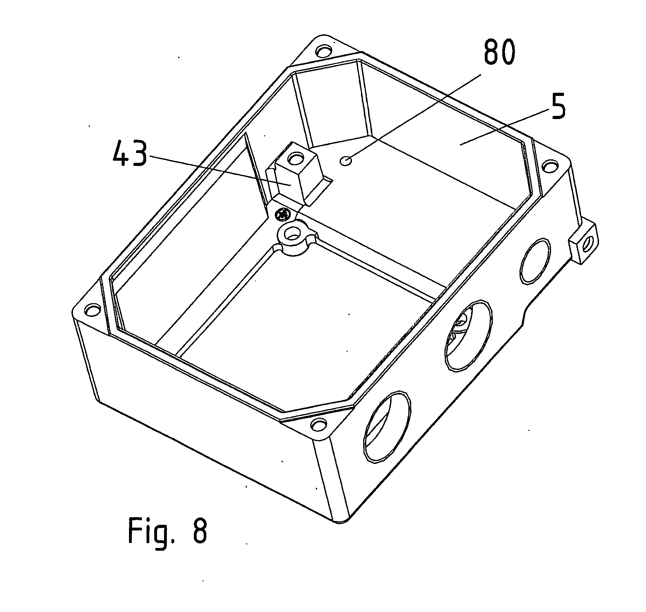

In den Figuren 1 bis 6 ist ein erfindungsgemäßer Elektromotor in verschiedenen Ansichten gezeigt. Das Unterteil des zugehörigen Anschlusskastens ist in den Figuren 7 und 8 in verschiedenen Ansichten gezeigt.

Der Motor ist als Elektromotor ausgeführt und weist einen Flansch 1 auf, mit welchem eine weitere anzutreibende Vorrichtung, wie Getriebe oder Rührgerät, anschließbar ist.

An seinem Statorgehäuse weist der Motor Kühlrippen 2 auf, die teilweise mandelförmige Verdickungen 3 aufweisen. Die Lüfterhaube 4 ist auf der dem Flansch 1 gegenüberliegenden Seite vorgesehen. Der auch als Klemmenkasten bezeichenbare Anschlusskasten ist aus einem Anschlusskastenunterteil 5 und einem mit diesem lösbar verbindbarem Anschlusskastenoberteil 6 als Deckel zusammengesetzt. Das Anschlusskastenunterteil 5 weist an seiner äußeren, dem Statorgehäuse des Motors zugewandten Seite Nocken 20 auf, die Materialanhäufungen zum Einbringen einer Bohrung darstellen.

Da die Teile des Motors, insbesondere aber die gehäusebildenden Teile des Motors, möglichst materialsparend ausgeführt sind, ist das Einbringen einer Bohrung im Gehäuse nicht einfach und stabil möglich. Daher bieten die Nocken 20 Materialverdickungen, in welche die Bohrlöcher 80 vom Inneren des Anschlusskastenunterteils aus einbringbar sind. Die Form der Nocken ist halfischflossenartig. Die Nocken sind zum Motor hin gerichtet vorgesehen an der Anschlusskastenunterseite. Ohne schräge Seite wäre die Festigkeit nicht genügend groß. Die halfischflossenartige Ausprägung ermöglicht bei geringfügig mehr Materialverbrauch als für die Bohrung 80 notwendig wäre eine hohe Festigkeit. Eine weitere Fläche, die schräg verlaufen würde, würde den Materialverbrauch weiter erhöhen, hätte aber keine entsprechend große Festigkeitserhöhende Wirkung. Das Bohrloch 80 ist als vorgegossenes Sackloch ausgeführt. Es ist nur Material um das Bohrloch 80 herum verwendet, so dass die minimale Menge an Material verbraucht ist, wobei nur eine schräg verlaufende Seite zur Erhöhung der Festigkeit unter geringem Materialverbrauch vorgesehen ist.

Das Anschlusskastenunterteil 5 umfasst in seiner Gehäusewand Kabel-Verschraubungen 30 zum Durchführen von Kabeln. Der von diesen umfasste Schutzleiter wird an der Schutzleiteranschlussvorrichtung 43 verbunden.

Der Gleichrichterbaustein 40 ist als Option mit den Befestigungsschrauben 41 im Anschlusskastenunterteil 5 befestigt.

Das Klemmbrett 42 dient zumindest zur Verbindung der durch die Kabel-Verschraubungen 30 geführten Versorgungsleitungen mit den Wicklungsdrähten des Stators.

Die Lüfterhaube 4 weist an ihrem Umfang in Umfangsrichtung einander abwechselnde Erhöhungen 100 und Vertiefungen 101 auf, also wellenförmige Einprägungen in Umfangsrichtung im Ansaugbereich der Lüfterhaube, auf. Auf diese Weise sind Geräuschabstrahlungen vermindert und zusätzlich ist die Steifigkeit der Lüfterhaube 4 erhöht. Die Lüfterhaube 4 weist zusätzlich einen umlaufenden Stapelrand 31 auf. Mittels diesem Stapelrand 31 sind die Hauben 4 im Lager platzsparend stapelbar. Der Stapelrand wirkt zusätzlich versteifend auf die Lüfterhaube 4.

Die mandelförmigen Verdickungen 3 sind als Aufdickung der Kühlrippen am Statorgehäuse ausgeführt für die Befestigung des Typenschildes, also Leistungsschildes, oder beispielsweise an einer anderen Seite für die Befestigung einer Fußplatte, auf der der Motor montierbar ist. Die mandelförmigen Verdickungen 3 sind dazu innerhalb einer Ebene angeordnet. Insbesondere vier hiervon jeweils sind zusammengehörend. Die Mandelform ist derart ausgeführt, dass sie die Strömung der Kühlluft zwischen zwei benachbarten Kühlrippen möglichst wenig behindern. Dazu sind sie etwa stromlinienförmig oder entsprechend mandelförmig verlaufend entlang der Kühlrippen. Die Kühlrippen sind also in diesen Bereichen nur etwas aufgedickt. Vorteiligerweise ist also der Motor besser entwärmt als im Stand der Technik. Denn es gibt keine Aufdickung, die den Luftstrom zwischen zwei Kühlrippen entlang der Kühlrippen behindert. Keine der Aufdickungen verbindet gar zwei benachbarte Kühlrippen.

Die Bohrlöcher sind bei weiteren erfindungsgemäßen Ausführungsbeispielen als Sacklochbohrungen ausgeführt.

Diejenigen Verdickungen, welche für die Befestigung der Fußplatte verwendbar sind, weisen bei weiteren erfindungsgemäßen Ausführungsbeispielen eine kegelförmige Vertiefung im Bereich des Bohrloches auf als Zentrierhilfe beim Einschrauben der Befestigungsschrauben.

Statt des Gleichrichterbausteins 40 sind bei weiteren erfindungsgemäßen Ausführungsbeispielen auch andere elektronische Schaltungen, wie Motorstarter oder Sanftanlaufgeräte oder Umrichter und Steuerschaltungen, oder Anschlussvorrichtungen, wie Klemmenleisten oder Haltevorrichtungen, wie Tragschienen oder dergleichen, verbindbar.

## Patentansprüche

1. Elektromotor mit Lüfter und zugehöriger Lüfterhaube,
wobei
die Lüfterhaube wellenförmige geräuschmindernde Einprägungen, insbesondere von außen sichtbare Einprägungen, aufweist,
wobei die Einprägungen in Umfangsrichtung wellenförmig verlaufen,
wobei die Lüfterhaube an ihrem Umfang in Umfangsrichtung einander abwechselnde radial gerichtete Erhöhungen und Vertiefungen aufweist als wellenförmige Einprägungen,
wobei an jeder axialen Position die Periodenlänge der wellenförmigen Einprägungen in Umfangsrichtung konstant ist,
wobei die Periodenlänge der wellenförmigen Einprägungen in Umfangsrichtung einen Wert aufweist, der in axialer Richtung vom Motor weg kleiner wird,
wobei an der Lüfterhaube ein Stapelrand vorgesehen ist,
wobei der Stapelrand die wellenförmigen Einprägungen begrenzt.

2. Elektromotor nach Anspruch 1,
**dadurch gekennzeichnet, dass**
der Stapelrand und die wellenförmigen Einprägungen derart zusammenwirken, dass die Festigkeit der Lüfterhaube insgesamt verbessert ist.

## Claims

1. An electric motor with fan and associated fan hood,
wherein
the fan hood has undulatory, noise-reducing impressions, in particular impressions visible from the exterior,
wherein the impressions run in an undulatory manner in the circumferential direction,
wherein as undulatory impressions, the circumference of the fan hood has elevations and depressions which are radially directed and which alternate in the circumferential direction,
wherein the period length of the undulatory impressions is constant in the circumferential direction at each axial position,
wherein the period length of the undulatory impressions in the circumferential direction has a value which becomes smaller away from the motor in the axial direction,
wherein a stacking edge is provided at the fan hood,
wherein the stacking edge bounds the undulatory impressions.

2. An electric motor according to claim 1, **characterised in that** the stacking edge and the undulatory impressions cooperate in such a manner that the rigidity of the fan hood as a whole is improved.

## Revendications

1. Moteur électrique comportant un ventilateur et un capot de ventilateur,
dans lequel
le capot de ventilateur présente des empreintes en forme d'onde réductrices de bruit, en particulier des empreintes visibles de l'extérieur,
les empreintes s'étendent en forme d'onde en direction circonférentielle,
le capot de ventilateur présente sur sa circonférence des élévations et des dépressions dirigées radialement, se succédant en alternance en direction circonférentielle en tant qu'empreintes en forme d'onde,
la longueur de période des empreintes en forme d'onde est constante en direction circonférentielle à chaque position axiale,
la longueur de période des empreintes en forme d'onde présente en direction circonférentielle une valeur qui devient plus petit en s'éloignant du moteur en direction axiale,
un bord d'empilage est prévu le capot de ventilateur,
le bord d'empilage limite les empreintes en forme d'onde.

2. Moteur électrique selon la revendication 1
**caractérisé en ce que**
le bord d'empilage et les empreintes en forme d'onde coopèrent de façon que la solidité du capot de ventilateur se trouve globalement améliorée.
